**Europäisches Patentamt**

**European Patent Office**

**Office européen des brevets**

(19)

(11) Veröffentlichungsnummer: **0 180 177**
**B1**

(12) **EUROPÄISCHE PATENTSCHRIFT**

(45) Veröffentlichungstag der Patentschrift:
05.07.89

(51) Int. Cl.⁴: **B 65 G 67/04**

(21) Anmeldenummer: **85113685.3**

(22) Anmeldetag: **28.10.85**

(54) Vorrichtung zum Transport von Lade- bzw. Stückgut, insbesondere zum Beladen der Tragfläche eines Fahrzeuges oder eines Containers.

(30) Priorität: **31.10.84 DE 8431915 U**

(43) Veröffentlichungstag der Anmeldung:
**07.05.86 Patentblatt 86/19**

(45) Bekanntmachung des Hinweises auf die Patenterteilung:
**05.07.89 Patentblatt 89/27**

(84) Benannte Vertragsstaaten:
**AT BE CH DE FR GB IT LI NL SE**

(56) Entgegenhaltungen:
**DE-B- 2 205 505**
**DE-B- 2 431 542**

(73) Patentinhaber: **Althammer, Heinz, Panoramastrasse 6, D-7258 Heimsheim (DE)**

(72) Erfinder: **Althammer, Heinz, Panoramastrasse 6, D-7258 Heimsheim (DE)**

(74) Vertreter: **Hiebsch, Gerhard F., Dipl.-Ing., Erzbergerstrasse 5A Postfach 464, D-7700 Singen 1 (DE)**

ACTORUM AG

## Beschreibung

Die Erfindung betrifft eine Vorrichtung zum Transport von Lade- bzw. Stückgut, insbesondere zum Beladen der Tragfläche eines Fahrzeuges oder eines Containers mit gestapelten Packeinheiten, die der Ladefläche einer fahrbaren Palette, eines Rolltrailers od. dgl. aufliegen und auf der Ladefläche der Palette der Tragfläche des Fahrzeuges zuführbar sind, wobei der Ladefläche der fahrbaren Palette eine auf dieser gegen sowie in die Fahrrichtung bewegbare und von ihr aufragende Fläche als Stirnwand und Abstreifeinrichtung zugeordnet ist, die mit wenigstens einem Antrieb verbunden ist und die auf seitlichen Führungen läuft.

Eine solche Vorrichtung ist aus der DE-B 2 205 505 bekannt.

Das Umschlagen von Stückgütern ist bekanntlich unverhältnismässig zeitaufwendig und kostenintensiv. Dies trifft nicht nur für das Beladen von Schiffen zu, sondern auch für das Füllen von Transportbehältern wie Containern oder Kastenaufbauten von Lastwagen. Eine Beschleunigung solcher Vorgänge konnte durch die Einführung von Paletten erzielt werden, welche vorab mit dem Ladegut versehen und dann beispielsweise von Gabelstaplern in den Transportbehälter hineingefahren werden; der Transportbehälter ist gefüllt, wenn mehrere beladene Paletten nebeneinander angeordnet und üblicherweise auch verzurrt sind. Somit lassen auch Paletten eine Vielzahl von Arbeitsvorgängen für die Beladung eines Transportbehälters notwendig werden.

Ein Fortschritt konnte bereits mit einer fahrbaren Palette oder einem Rolltrailer nach der eingangs genannten DE-B 2 205 505 erzielt werden. Die Ladefläche dieser fahrbaren Palette ist als Rollenbahn ausgebildet. Eine endlose antreibbare Zugkette greift am Rollenteppich mittels eines Steges an. Sind alle für einen Container oder ein Fahrzeug benötigten Stückgüter oder Packeinheiten auf den Rollenteppich übergelaufen, so wird der Rollenteppich mittels der Zugkette in den Container eingefahren. Dabei sind Torklappen, die als Stirnwand später eine Abstreifeinrichtung bilden, bis zu diesem Zeitpunkt seitlich vom Rollenteppich angeordnet und offen, da durch sie hindurch die Förderung der Packeinheiten erfolgt, für die diese Torklappen Begrenzungsanschläge in der Breite bilden. Werden also nun die Packeinheiten auf dem Rollenteppich eingefahren, so werden die Torklappen mittels einer Kolbenzylinderanordnung in die Palettenvorschubbahn eingeschwenkt und geschlossen. Am Ende der Laufbahn für den Rollenteppich sind die geschlossenen Torklappen als Stirnwand feststellbar. Sind die Packeinheiten voll in den Container eingelaufen, so werden die Torklappen arretiert. Der Getriebemotor für den Antrieb des Rollenteppichs wird auf Rücklauf geschaltet und der Rollenteppich unter der als Anschlag dienenden geschlossenen Stirnwand der Torklappen zurückgezogen. Dabei werden die Packeinheiten im Container vom Rollenteppich abgestreift und auf dem Containerboden abgestellt.

Die Torklappen sind auf seitlichen Wagen angeordnet, die auf seitlichen Führungsschienen verfahrbar sind. Über die zugehörige Antriebseinrichtung für die seitlichen Wagen auf den seitlichen Führungsschienen gibt der Stand der Technik keine Lehre.

Angesichts dieses Standes der Technik hat sich der Erfinder das Ziel gesetzt, bei einer Vorrichtung der eingangs erwähnten Art eine weitergehende Vereinfachung des Beladens von Lastwagenpritschen, Transportbehältern od. dgl. zu entwickeln mit einer Vorrichtung, die unkompliziert in ihrem Aufbau und möglichst vielfältig einzusetzen ist.

Zur Lösung dieser Aufgabe führt, dass der Antrieb zur Bewegung der Stirnwand ein die Stirnwand mit einer Antriebseinrichtung verbindender Strang ist, der in der seitlichen Führung aufgenommen ist, und dass bei auf Fahrrollen laufender Palette der Strang mit wenigstens einer der Fahrrollen der Palette treibend verbunden ist.

Da die Stirnwand nach der Erfindung nicht wie diejenige nach dem Stand der Technik in Form von Torklappen teilbar und verschwenkbar sein muss, ergibt sich eine verblüffend einfache Lösung, wobei in einer Weiterbildung der Strang als unendliche Laschenkette ausgebildet sein kann, die um Rollen geführt ist.

Die Stirnwand kann also auf der Ladefläche verschoben werden und damit die darauf ruhenden Ladegüter bewegen. Dies ist insbesondere dann von Bedeutung, wenn man den erfindungsgemässen Rolltrailer zum Beladen von Ladepritschen od. dgl. auf diese aufschiebt und dann jene bewegbare Stirnwand benutzt, um während des Zurückziehens des Rolltrailers bzw. der Palette die Ladegüter abzuschieben. Der Ladevorgang wird hierdurch erheblich vereinfacht. Nur am Rande sei hier angedeutet, dass selbstverständlich die bewegbare Stirnwand auch als Zugorgan für von einem Stellboden auf die Ladefläche des Rolltrailers zu überführende Stückgüter geeignet ist. Erfindungsgemäss kann hierzu die Stirnwand mit Haken od. dgl. Halteelementen für Zurrorgane versehen sein.

Um die Stirnwand vornehmlich in deren Ruhelage – aber auch in jeder anderen Stellung über der Ladefläche – fixieren zu können, ist sie und/oder wenigstens einer ihrer Stränge mit einer Bremseinrichtung ausgestattet, welche ein Fixieren in einer bestimmten Lage erlaubt.

Die Ladefläche weist erfindungsgemäss quer zur Fahrrichtung verlaufende Tragrollen als Träger für das Ladegut auf, wobei diese Tragrollen bevorzugt zumindest einends an der Seitenschiene lagern.

Die Tragrollen können im Rahmen der Erfindung in einfacher Weise an den Seitenschienen oder einerseits an der Seitenschiene sowie anderseits an einem Mittelträger gelagert sein, jedoch hat es sich als besonders günstig erwiesen, die Tragrollen zumindest teilweise mit einem Antrieb zu verbinden. Als Antrieb eignet sich besonders der Strang für die Seitenwand, der – an eine der Fahrrollen angeschlossen – synchron zur Palettenbewegung treibt. Seitenwand und Tragrollen sind bevorzugt gleichlaufend bewegbar mit dem Antrieb gekuppelt.

Die erfindungsgemässe Palette besitzt also in bevorzugter Ausführung eine Ladefläche, welche als Rollenbahn ausgebildet ist und zudem die beschriebene bewegliche Wand aufweist. Die Tragrollen sind beim Transport dank des Stranges gebremst, um ein Rutschen der Ladung zu vermeiden.

Die in Längsschienen geführte Stirnwand ist – wie beschrieben – mit einer Rolle oder einem Rad der Palette bevorzugt so verbunden, dass die Stirnwand synchron zur Bewegung der Palette, jedoch zu dieser gegenläufig, geführt wird. Bei gleichzeitig gelöster Bremse der Tragrollen der Ladefläche wird das Ladegut nach hinten abgestreift.

Dieser Vorgang wird noch dadurch vereinfacht, dass das Heckende der Palette als Rampe ausgebildet ist, welche auf die Tragfläche des Lastwagens od. dgl. abgeklappt wird und das Abschieben des Ladegutes vereinfacht.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt jeweils in Schrägsicht:

Fig. 1 eine fahrbare Palette für Lade- bzw. Stückgut;
Fig. 2 die Palette während eines Ladevorganges;
Fig. 3 ein vergrössertes und geschnittenes Detail aus Fig. 2.

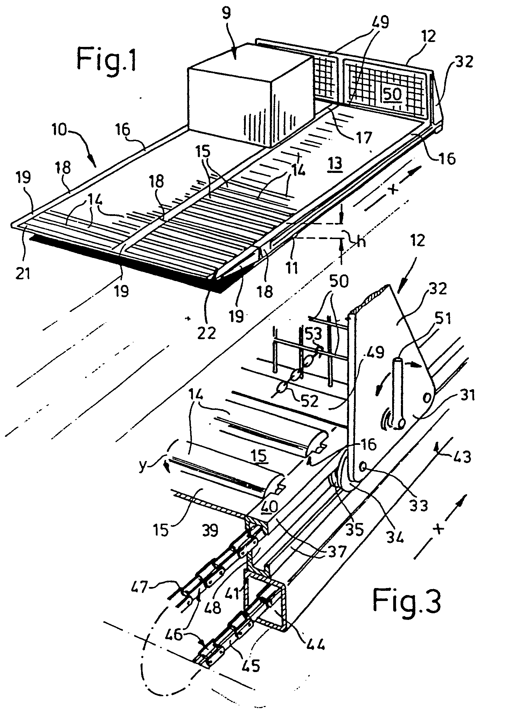

Gemäss Fig. 1 ist zum Transport von – bei 9 angedeuteten – Stückgütern eine Palette 10 verhältnismässig geringer Bodenhöhe h mit bodenwärts angeordneten Fahrrollen 11 sowie mit einer Stirnwand 12 versehen. Die Ladefläche 13 der Palette 10 ist als Rollenbahn aus zwei Reihen von – quer zur allgemeinen Fahrrichtung x vorgesehenen – Tragrollen 14 ausgebildet; letztere lagern unter Zwischenschaltung paralleler Stegplatten 15 jeweils einends in einer Seitenschiene 16 sowie andernends in einem Mittelträger 17.

An die – in Fahrrichtung x gesehen – hinteren Enden 18 der Seitenschienen 16 und des Mittelträgers 17 sind sich längsschnittlich verjüngende Tragkeile 19 durch Bolzen 20 angelenkt, zwischen denen ebenfalls Tragrollen 14 ruhen und die mit letzteren sowie mit einem Endprofil 21 eine abklappbare Rampe 22 ergeben.

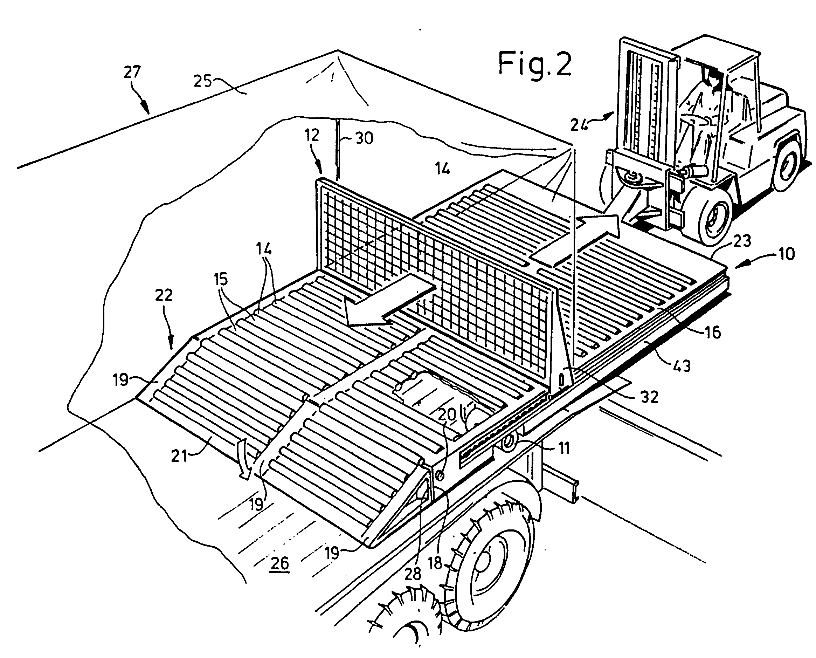

Fig. 2 lässt erkennen, dass die Palette 10 mittels einer Zugmaschine 24, beispielsweise einem Gabelstapler, gegen die allgemeine Fahrrichtung x auf die von einer Plane 25 überspannte Pritsche oder Tragfläche eines Lastwagens 27 geschoben werden kann – die auf den Tragrollen 14 beförderten Stückgüter 9 sind in Fig. 2 aus Gründen der Übersichtlichkeit vernachlässigt. Ist die Palette 10 gänzlich auf der Tragfläche 26 plaziert, wird die Rampe 22 abgeklappt, bis die kurzen Seiten 28 der Tragkeile 19 an die hinteren Enden 18 der Seitenschienen 16 anschlagen.

Nun wird die Palette 10 langsam in Fahrrichtung x zurückgezogen und gleichzeitig die Stirnwand 12 auf den Seitenschienen 16 gegenläufig so bewegt, dass sie bevorzugt am Heckrahmen 30 des Lastwagens 27 verharrt und als Abschiebeinrichtung für das Stückgut 9 dient, das über jene Rampe 22 auf die Tragfläche 26 gleitet.

Hierzu ist die Stirnwand 12 am Fussende 31 von Seitenwangen 32 an Achsenbolzen 33 mit Rädern 34 ausgerüstet; diese weisen jeweils eine Umfangsnut 35 auf, in die Führungsstege 37 der Seitenschiene 16 eingreifen. Diese ist von C-förmigem Querschnitt aus Mittelsteg 39 und Schenkeln 40, 41, wobei an letztere die Führungsstege 32 parallel zum Mittelsteg 39 angeformt sind und eine Führungsbahn für jene Räder 34 begrenzen.

Die Seitenwangen 32 sind durch Querprofile 39 sowie ein Stabnetz 50 verbunden.

Gemäss Fig. 3 ist an den unteren Schenkel 41 der Seitenschiene 16 ein Rohrprofil 43 angeschweisst, in dessen Innenraum 44 das Untertrum 45 einer Laschenkette 46 läuft, deren Obertrum 47 vom Innenraum 48 der Seitenschiene 16 aufgenommen ist. Bei einer besonderen Ausgestaltung können Seitenschiene 16 und Rohrprofil 43 auch einstückig aus Leichtmetall stranggepresst sein. Die Laschenkette 46 ist mit einem Rad der Palette 10 verbunden; sie stellt so mit dem Rad einen Antrieb her, der beim Bewegen der Palette 10 die Stirnwand 12 mit der Geschwindigkeit der Palettenbewegung führt.

Mittels eines Hebels 51 kann die Seitenwange 32 gebremst und festgelegt werden – die Reibungsfläche zwischen Schenkel 40 und einem Bremselement am Hebel 51 ist in der Zeichnung nicht wiedergegeben.

Bei einem in der Zeichnung nicht erkennbaren Ausführungsbeispiel sind die Tragrollen 14 selbst gesteuert bewegbar an einen Antrieb angeschlossen, der während der Fahrt der Palette 10 die Tragrollen 14 an ihrer Drehbewegung hindert und somit als Bremse dient. Erst zu Beginn des oben erläuterten Abstreifvorganges werden die Tragrollen 14 aus ihrer Ruhelage befreit und zur Rampe 22 hin gedreht.

Läuft das Obertrum 47 der Laschenkette 46 – zur Drehung der Tragrollen 14 in deren Entladerichtung y – gegen die allgemeine Fahrrichtung x, so ist die Stirnwand 12 in nicht wiedergegebener Form an das Obertrum 47 angeschlossen. Läuft das an die Tragrollen 14 angeschlossenen Obertrum 47 bei deren Drehung in Pfeilrichtung y (Fig. 3) – dank einer anderen Kupplungsform jener Tragrollen 14 – in Fahrrichtung x so ist die Stirnwand 12 mit dem Untertrum 45 verbunden. Wesentlich ist in jedem Falle, dass die Stirnwand 12 beim Herausziehen der Palette 10 in Pfeilrichtung x mit bevorzugt synchroner Geschwindigkeit entgegengesetzt geführt wird.

In Fig. 3 ist bei 52 noch eine Zugkette angedeutet, die mit ihrem Hakenende 53 im Stabnetz 50 festliegt; es ist denkbar, die Stirnwand 12 auf ihrem Wege von der Rampe 22 zur Stirnkante 23 der Palette 10 als Zugorgan für aufzunehmende Stückgüter zu verwenden – an diesen werden jene Zugketten 52 festgelegt und das Stückgut so mit dem Stabnetz 50 verbunden. Bei dessen Bewegung in Fahrrichtung x rutscht das Stückgut über die Rampe 22 auf die Ladefläche 13.

## Patentansprüche

1. Vorrichtung zum Transport von Lade- bzw. Stückgut, insbesondere zum Beladen der Tragfläche eines Fahrzeuges oder eines Containers mit gestapelten Packeinheiten, die der Ladefläche (13) einer fahrbaren Palette (10), eines Rolltrailers od. dgl. aufliegen und auf der Ladefläche (13) der Palette (10) der Tragfläche (26) des Fahrzeuges (27) zuführbar sind, wobei der Ladefläche (13) der fahrbaren Palette (10) eine auf dieser gegen sowie in die Fahrrichtung bewegbare und von ihr aufragende Fläche als Stirnwand (12) und Abstreifeinrichtung zugeordnet ist, die mit wenigstens einem Antrieb verbunden ist, und die auf seitlichen Führungen (39, 40, 41) läuft, dadurch gekennzeichnet, dass der Antrieb zur Bewegung der Stirnwand (12) ein die Stirnwand (12) mit einer Antriebseinrichtung verbindender Strang (Laschenkette 46) ist, der in der seitlichen Führung (Führungsstege 37) aufgenommen ist, und dass bei auf Fahrrollen (11) laufender Palette (10) der Strang (Laschenkette 46) mit wenigstens einer der Fahrrollen (11) der Palette (10) treibend verbunden ist.

2. Vorrichtung nach Anspruch 1, dadurch gekennzeichnet, dass der Strang als unendliche Laschenkette (46) ausgebildet ist, die um Rollen geführt ist.

3. Vorrichtung nach Anspruch 1 oder 2, dadurch gekennzeichnet, dass der Ladefläche (13) der Palette (10) eine an sich bekannte Seitenschiene (16) als Führungsschiene zugeordnet ist, entlang deren der Strang oder die Laschenkette (46) verläuft, wobei der Seitenschiene (16) die Führung für die Stirnwand (12) zugeordnet ist, und dass die Seitenschiene (16) mit Führungsstegen (37) eine Bewegungsbahn für wenigstens ein Rad (34) der Stirnwand (12) bildet.

4. Vorrichtung nach Anspruch 3, dadurch gekennzeichnet, dass die Seitenschiene (16) querschnittlich ein stehendes C-Profil aufweist, dessen miteinander fluchtende freie Führungsstege (37) in eine Umfangsnut (35) des Rades (34) eingreifen.

5. Vorrichtung nach wenigstens einem der Ansprüche 3 oder 4, gekennzeichnet durch zumindest zwei Räder (34) an einer Seitenwange (32) der Stirnwand (12) sowie Querprofile (49), welche die Seitenwange (32) mit einer gleichartigen Seitenwange an der anderen Seitenschiene (16) der Ladefläche (13) verbinden.

6. Vorrichtung nach einem der Ansprüche 1 bis 5, dadurch gekennzeichnet, dass wenigstens ein Strang (Laschenkette 46) bzw. zumindest ein Rad (34) der dem Strang zugeordneten Seitenwange (32) mit einer Bremseinrichtung (Hebel 51) ausgestattet sind/ist.

7. Vorrichtung nach einem der Ansprüche 3 bis 6, dadurch gekennzeichnet, dass die Ladefläche (13) der Palette (10) mit quer zur Fahrrichtung (x) verlaufenden Tragrollen (14) als Träger des Ladegutes (9) ausgerüstet ist, welche zumindest einends an der Seitenschiene (16) lagern und/oder wenigstens teilweise mit einem Antrieb verbunden sind.

8. Vorrichtung nach Anspruch 7, dadurch gekennzeichnet, dass die Tragrollen (14) mit dem Strang (Laschenkette 46) für die Seitenwand (12) verbunden und davon angetrieben sind, wobei gegebenenfalls Seitenwand (12) und Tragrollen (14) gleichlaufend bewegbar angekuppelt sind.

9. Vorrichtung nach wenigstens einem der Ansprüche 1 bis 8, dadurch gekennzeichnet, dass an dem Heckende (18) der Palette (10) eine Rampe (22) angelenkt ist, die gegebenenfalls zwischen keilförmigen seitlichen Tragkeilen (19) Tragrollen (14) aufweist.

10. Vorrichtung nach einem der Ansprüche 1 bis 9, dadurch gekennzeichnet, dass die Seitenschiene/n (16) an jedem Ende mit einem Anschlag für die Stirnwand (12) versehen ist.

## Claims

1. Device for the transport of loads, i.e. unitload, especially for the loading of a bearing surface of a vehicle or of a container with racked packing units, which lie on th loading surface (13) of a mobile pallet (10), on a roll trailer or similar and can be delivered to the loading surface (13) of the mobile pallet (10) of the bearing surface (26) of the vehicle (27), whereby to the loading surface (13) of the mobile pallet (10), a towering-up surface is assigned as front wall (12) and as stripping device, being mobile against aswell as in the direction of motion, connected with a driving gear and running on sideward slideways (39, 40, 41), characterized in that the driving gear for the motion of the front wall (12) a rope (plate link chain 46) is, which connects the front wall (12) with a driving device, which is integrated into the sideward slideway (guiding plank 37) and which, with a pallet (10) running on forwarding rollers, the rope (plate link chain 46) is at least propellantly connected to one of the forwarding rollers (11) of the pallet (10).

2. Device according to claim 1, characterized in that the rope is developed as boundless plate link chain (46), which is run around rollers.

3. Device according to claim 1 or 2, characterized in that to the loading surface (13) of the pallet (10) a known side-rail (16) is assigned as guidance rail, alongside which the rope or the plate link chain (46) runs, whereby the guidance for the front wall (129) is assigned to the side-rail (16) and that together with the guiding planks (37), the side-rail (16) forms a motion track for at least one wheel (34) of the front wall (12).

4. Device according to claim 3, characterized in that the side-rail (16) shows cross-sectionally a standing C-profile, whose freely together aligned guidance planks (37) engage in a circumferential groove (35) of the wheel (34).

5. Device according to at least one of the claims 3 or 4, characterized in that there are at least two wheels (34) on a side-cheek (32) of the front wall (12), aswell as a cross-section (49), which connects the side-cheek (32) to a similar side-cheek on the side-rail (16) of the loading surface (13).

6. Device according to one of the claims 1 to 5, characterized in that at least one rope (plate link chain 46), i.e. at least one wheel (34) of the cheek (32) assigned to the rope, is equipped with a braking device (lever 51).

7. Device according to one of the claims 3 to 6, characterized in that the loading surface (13) of the pallet (10) is equipped with carrier-rolls running crosswise to the direction of motion (x), which serve as carriers of the loading goods (9) and which, at least, are stored at one end of the side-rail (16) and/or are at least connected partly with a driving device.

8. Device according to claim 7, characterized in that the carrier-rolls (14) are connected with and accelerated by the rope (plate link chain 46) for the front wall (12), whereby if necessary, front wall (129) and the carrier-rolls (14) are, running synchronously, coupled.

9. Device according to at least one of the claims 1 to 8, characterized in that to the rear (18) of the pallet (10) a ramp (22) is linked, which if necessary, show carrier-rolls (14) between wedge-shaped, lateral carrier-wedges (19).

10. Device according to one of the claims 1 to 9, characterized in that the side rail/s (16) are at every end equipped with a stop motion device for the front wall (12).

**Revendications**

1. Dispositif pour le transport de fret ou charge isolée particulièrement pour le chargement de la surface porteur d'un véhicule ou d'un container avec des unités d'emballage empilées qui se trouvent sur la plateforme de chargement (13) d'une palette mobile (10), d'une remorque UFR ou d'une chose semblable et qui peuvent sur la plateforme de chargement (13) de la palette (10) être menées à la surface porteur (26) du véhicule (27), la plateforme de chargement (13) de la palette mobile (10) étant pourvue d'une surface comme paroi frontale (12) et dispositif racleur qui se trouve sur elle, s'en dressant verticalement et amovible dans et contre le sens de marche, liée à au moins un mécanisme de commande et qui avance sur des guides latéraux (39, 40, 41), caractérisé en ce que le mécanisme de commande destiné au déplacement de la paroi frontale (12) est une corde (chaîne à articulations 46) qui lie la paroi frontale (12) à un dispositif de commande et qui se trouve dans le guide latéral (traverses de guidage 37) et que lors du déplacement de la palette (10) sur les poulies (11) la corde (chaîne à articulations 46) est liée de manière menante à au moins une des poulies (11) de la palette (10).

2. Dispositif selon la revendication 1 caractérisé en ce que la corde est formée comme chaîne à articulations infinie (46) qui est menée autour de poulies.

3. Dispositif selon la revendication 1 ou 2 caractérisé en ce que la plateforme de chargement (13) de la palette (10) possède un guide latéral (16) connu en soi comme glissière le long de laquelle se trouve la corde ou la chaîne à articulations (46), au guide latéral (16) étant attribué le guidage pour la paroi frontale (12) et que le guide latéral (16) constitue avec des traverses de guidage (37) une trajectoire pour au moins une roue (34) de la paroi frontale (12).

4. Dispositif selon la revendication 3 caractérisé en ce que le guide latéral (16) présente en section transversale un profil de C debout dont les tranverses de guidage (37) libres et alignés l'une par rapport à l'autre s'engrenent dans une rainure circonférentielle (35) de la roue (34).

5. Dispositif selon au moins une des revendications 3 ou 4 caractérisé par au moins 2 roues (34) à une jumelle latérale (32) de la paroi latérale (12) ainsi que par des profilés transverales (49) qui lient la jumelle latérale (32) à une jumelle latérale similaire à l'autre guide latéral (16) de la plateforme de chargement (13).

6. Dispositif selon une des revendications 1 à 5 caractérisé en ce que au moins une corde (chaîne à articulations 46) ou au moins une roue (34) de la jumelle latérale (32) attribuée à la corde est/son pourvu(s) d'un dispositif de frein (levier 51).

7. Dispositif selon une des revendications 3 à 6 caractérisé en ce que la plateforme de chargement (13) de la palette (10) possède des rouleaux porteurs (14) étant situés transversalement au sens de marche (x) comme porteurs du fret (9) qui sont logés au moins à un côté au guide latéral (16) et/ou sont liés au moins partiellement à un mécanisme de commande.

8. Dispositif selon la revendication 7 caractérisé en ce que les rouleaux porteurs (14) sont liés à la corde (chaîne à articulations 46) pour la paroi latérale (12) et qu'ils en sont actionnés, la paroi latérale (12) et les rouleaux porteurs (14) étant, le cas échéant, accouplés de manière mobile et synchrone.

9. Dispositif selon au moins une des revendications 1 à 8 caractérisé en ce que au côté arrière (18) de la palette (10) est articulée une rampe (22) qui présente, le cas échéant, des rouleaux porteurs (14) entre des clavettes porteurs latérales cunéiformes (19).

10. Dispositif selon une des revendications 1 à 9 caractérisé en ce que le/les guide(s) latéral(aux) (16) est/sont pourvu(s) à chaque extrémité d'un arrêt pour la paroi frontale (12).

Fig.1

Fig.3

Fig.2

EP 0 180 177 B1